# FASCICULE DE BREVET EUROPEEN

(11) **EP 0 626 559 B1**
(45) Date de publication et mention de la délivrance du brevet: **08.04.1998**
(21) Numéro de dépôt: 94420148.2
(22) Date de dépôt: 20.05.1994
(51) Int. Cl.: G01B 5/20

(54) **Appareil de vérification de concentricité**
Konzentrizitätsüberprüfungsgerät
Concentricity verifying apparatus

(30) Priorité: 26.05.1993 FR 9306534
(43) Date de publication de la demande: 30.11.1994
(73) Titulaire: SOCIETE FLORENZA (Société Anonyme), F-74300 Thyez (FR)
(72) Inventeur: Florenza, Charles, F-74970 Marignier (FR); Curatola, Paul, F-74950 Scionzier (FR)
(74) Mandataire: Poncet, Jean-François

(56) Documents cités:
- GB-A- 582 636
- GB-A- 714 476
- US-A- 4 538 357
- US-A- 4 679 330
- US-A- 4 977 682

## Description

La présente invention concerne les appareils permettant de vérifier la concentricité ou la circularité d'une pièce mécanique de forme généralement cylindrique.

On connaît notamment un appareil portable de vérification de concentricité, décrit dans le brevet US-A-4 679 330. Cet appareil comprend, sur une platine support, deux rouleaux supports à axes parallèles portés par un premier bloc support unique solidaire de la platine, les deux rouleaux supports étant entraînés en rotation par un bouton d'actionnement en rotation et une courroie de transmission. Les deux rouleaux supports, mobiles en rotation autour de leurs axes parallèles fixes, sont disposés à égales distances de la platine de base, et sont sensiblement tangents l'un à l'autre. Un rouleau supérieur d'appui, monté en bout d'un levier articulé sur le support, est adapté pour repousser une pièce à usiner en appui sur les rouleaux supports. Les rouleaux supports dépassent du premier bloc support à l'une de ses extrémités. Face au rouleau support est disposé un bloc support de sonde, à l'écart du premier bloc support, et conformé pour maintenir et positionner une sonde de mesure en relation avec la pièce à usiner. La sonde est mobile, et peut être positionnée successivement en différentes zones décalées axialement de la pièce à vérifier, ladite pièce étant entraînée en rotation par les rouleaux supports contre lesquels elle est maintenue par le rouleau d'appui.

Un tel appareil permet effectivement de contrôler la concentricité d'une pièce entraînée en rotation par les rouleaux supports contre lesquels elle est repoussée par le rouleau d'appui. Pour des pièces de petit diamètre, c'est-à-dire dont le diamètre est de l'ordre du diamètre des rouleaux d'appui, cet appareil permet également de vérifier la circularité des surfaces.

Par contre, cet appareil ne permet pas de vérifier, avec une bonne précision, la circularité de pièces dont le diamètre est nettement supérieur au diamètre des rouleaux supports.

Egalement, cet appareil ne permet pas de contrôler avec une bonne précision le voile d'une face frontale de pièce à vérifier, lorsqu'une telle pièce présente un diamètre nettement supérieur au diamètre des rouleaux supports.

Mais aussi, on constate qu'un tel appareil ne permet pas de mesurer ou de contrôler de manière fiable la concentricité de certaines pièces, notamment lorsque ces pièces présentent simultanément des défauts de circularité multiples.

Et cet appareil n'offre pas des possibilités suffisantes de positionnement relatif de la sonde de mesure, pour détecter tous les types de défauts.

Le document US-A-4 977 682 décrit un appareil de vérification de circularité, dans lequel deux rouleaux supports fous sont montés sur deux supports déplaçables transversalement par translation. Ce document ne comporte aucun enseignement relatif aux mesures de concentricité, et le dispositif qu'il décrit ne permet pas ces mesures, car le palpeur n'est pas déplaçable axialement pour palper successivement plusieurs diamètres et vérifier leur concentricité.

Le problème proposé par la présente invention est de concevoir un nouvel appareil de vérification de concentricité, qui, tout en étant portable et d'encombrement réduit, permette de vérifier avec une bonne précision et une bonne fiabilité la concentricité des diamètres de pièces à vérifier dans une plage de diamètres nettement plus étendue, c'est-à-dire pour des diamètres de pièces pouvant être non seulement de l'ordre du diamètre des rouleaux d'appui mais également nettement supérieurs à ce diamètre, et pour des pièces présentant les défauts les plus variés. L'idée est de pouvoir, avec un même appareil, multiplier les contrôles sur une même pièce, dans des conditions de mesure différentes, permettant de détecter de façon fiable les défauts de concentricité en présence de défauts de circularité multiples.

Pour atteindre ces objets ainsi que d'autres, un appareil de vérification de concentricité selon l'invention comprend deux rouleaux supports à axes parallèles portés par un socle, les rouleaux supports étant entraînés tous deux en rotation par des moyens d'entraînement ; un rouleau d'appui déplaçable, porté par le socle, est adapté pour repousser une pièce à vérifier en appui sur les rouleaux supports ; des moyens support de sonde maintiennent et positionnent une sonde en relation avec la pièce à vérifier, en différentes zones décalées axialement ; l'un et l'autre des rouleaux supports sont déplaçables latéralement sur le socle parallèlement à eux-mêmes, pour être écartés ou rapprochés l'un de l'autre, et pour être bloqués en toute position désirée par des organes de blocage actionnables par l'utilisateur, de sorte que l'utilisateur peut modifier l'écartement relatif des rouleaux supports pour modifier et adapter les conditions de mesure. Selon l'invention, chaque rouleau support est monté sur un bloc support qui pivote sur le socle selon un axe de pivotement parallèle à l'axe des rouleaux supports, et qui peut être bloqué en rotation par un desdits organes de blocage actionnables par l'utilisateur.

Par ces dispositions, il est possible d'entraîner en rotation les deux rouleaux supports sans perturber les possibilités de pivotement des blocs supports autour de leurs axes respectifs.

Le choix de l'écartement des rouleaux supports permet de reconstituer des conditions idéales d'appui en fonction du diamètre à contrôler sur la pièce. On peut en effet choisir l'angle formé par les points d'appui de la pièce à contrôler sur les rouleaux supports. Les résultats de mesure dépendent non seulement des défauts présents sur la pièce, mais aussi des conditions de mesure et notamment de cet angle, par exemple en présence de défauts de circularité multiples. Le choix de certains angles permet d'éliminer la lecture de certains défauts de circularité. Il est ainsi possible, selon l'invention, de faire plusieurs mesures selon des écartements différents des rouleaux supports, correspondant à des angles appropriés, afin de faire une analyse des défauts, et d'obtenir une mesure fiable des défauts de concentricité.

Le fait que l'un et l'autre des rouleaux supports sont déplaçables latéralement sur le socle permet non seulement d'augmenter les capacités de réglage d'écartement et donc les capacités en diamètre de pièce à vérifier, mais en outre d'augmenter les possibilités de variation de conditions de mesure pour détecter des défauts différents.

Les moyens support de sonde comprennent avantageusement un bras support de sonde à plusieurs segments articulés les uns aux autres, et dont la base est montée à pivotement en bout d'un axe solidaire de l'un des blocs supports, avec au moins une articulation à cran de blocage définissant une position de test à laquelle il est facile de retourner après un pivotement du bras dans le sens de l'écartement de la sonde par rapport à la pièce à vérifier. On évite ainsi d'avoir à prévoir un second bloc support pour porter la sonde, et on diminue ainsi l'encombrement de l'appareil.

D'autres objets, caractéristiques et avantages de la présente invention ressortiront de la description suivante de modes de réalisation particuliers, faite en relation avec les figures jointes, parmi lesquelles:

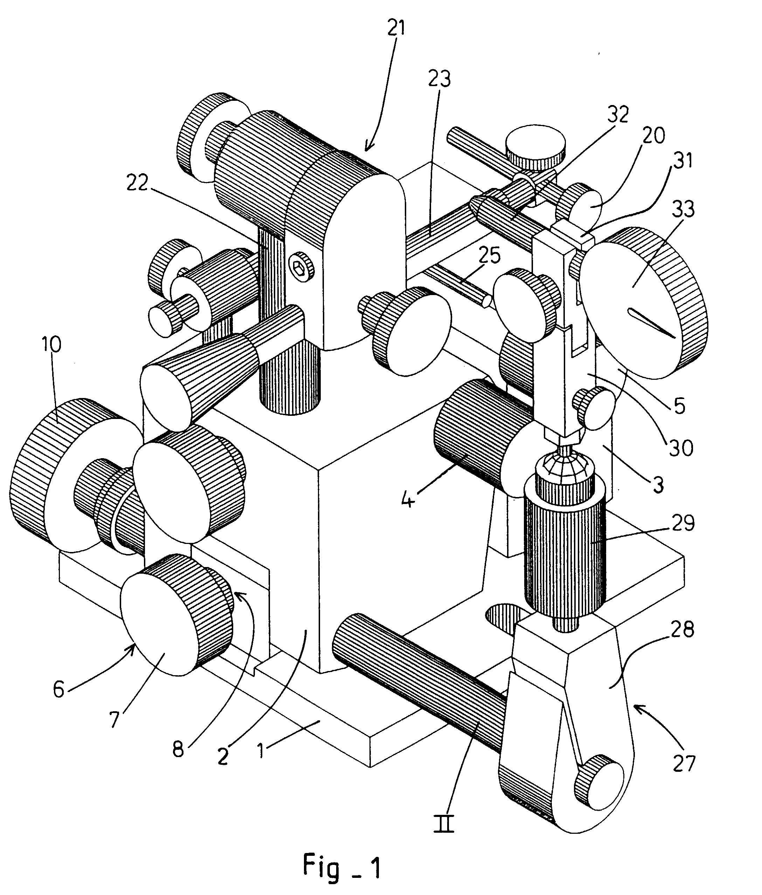

- la figure 1 est une vue en perspective d'un appareil de vérification de concentricité selon un mode de réalisation de l'invention ;

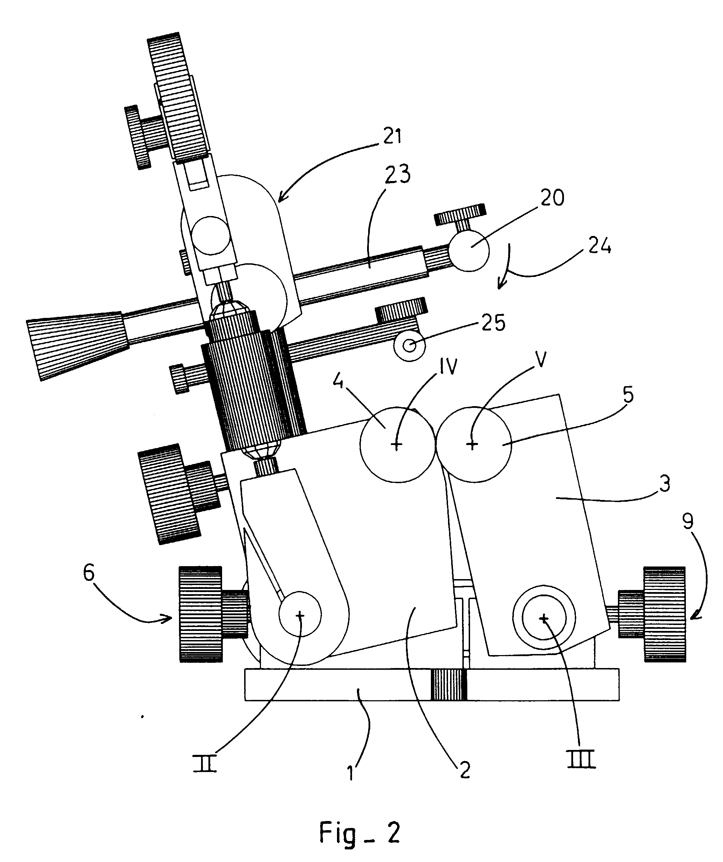

- la figure 2 est une vue de face de l'appareil de la figure 1, dans une position dans laquelle les rouleaux supports sont rapprochés l'un de l'autre ;

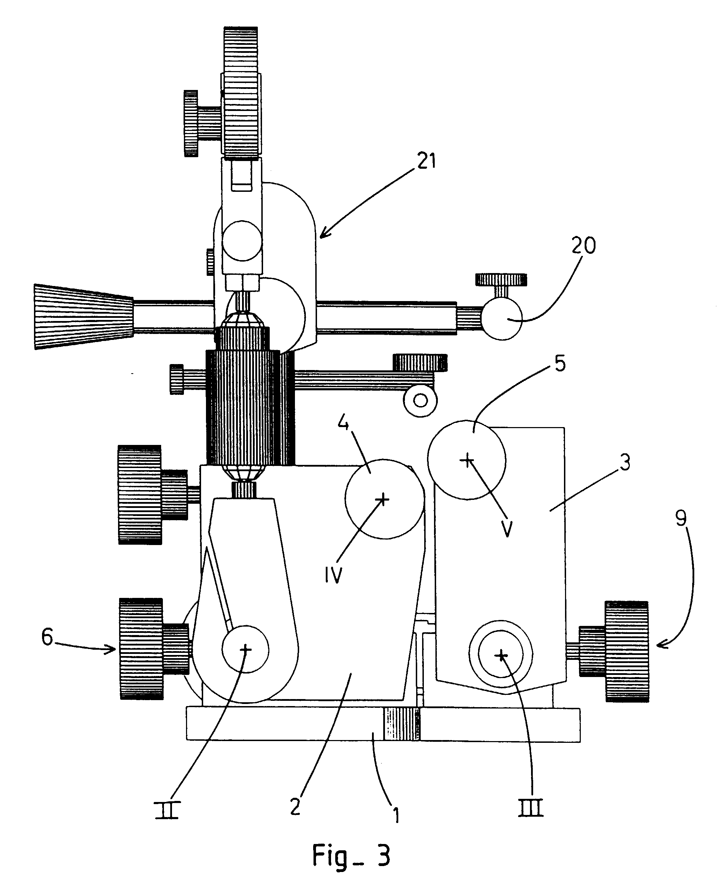

- la figure 3 est une vue de face de l'appareil de la figure 1, dans une position dans laquelle les rouleaux supports sont légèrement écartés l'un de l'autre et à des niveaux différents ;

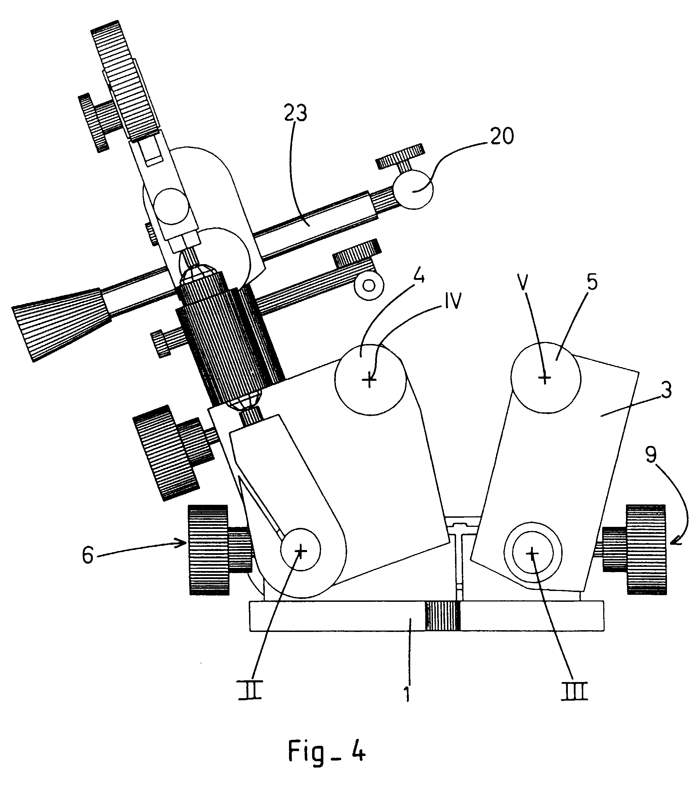

- la figure 4 est une vue de face de l'appareil de la figure 1, dans une position dans laquelle les rouleaux supports sont nettement écartés l'un de l'autre ;

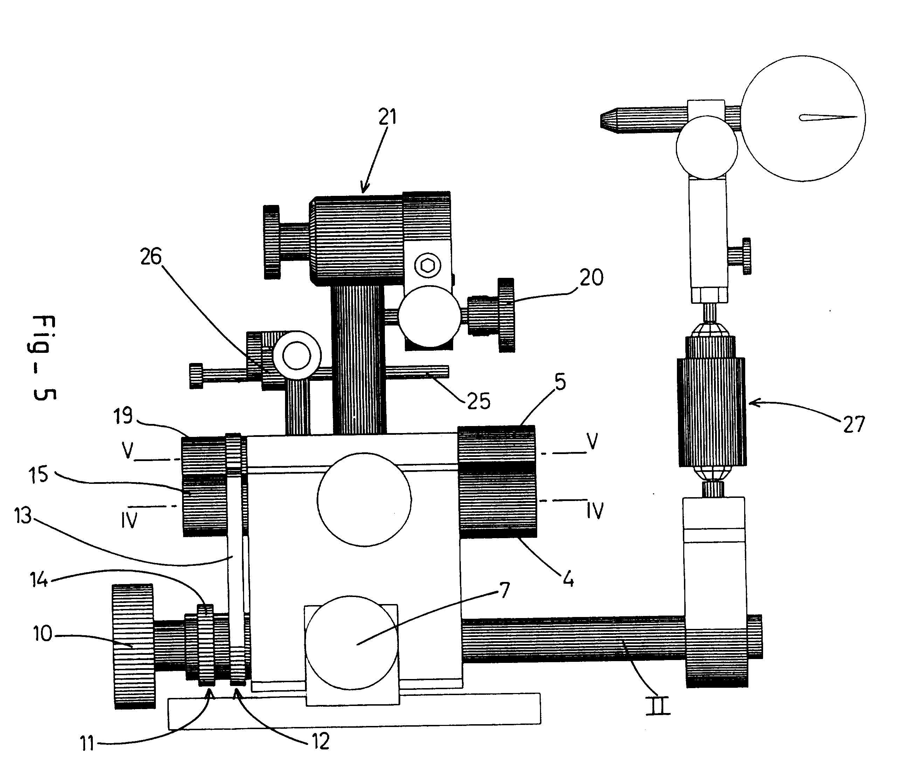

- la figure 5 est une vue de côté gauche de l'appareil de la figure 1 ; et

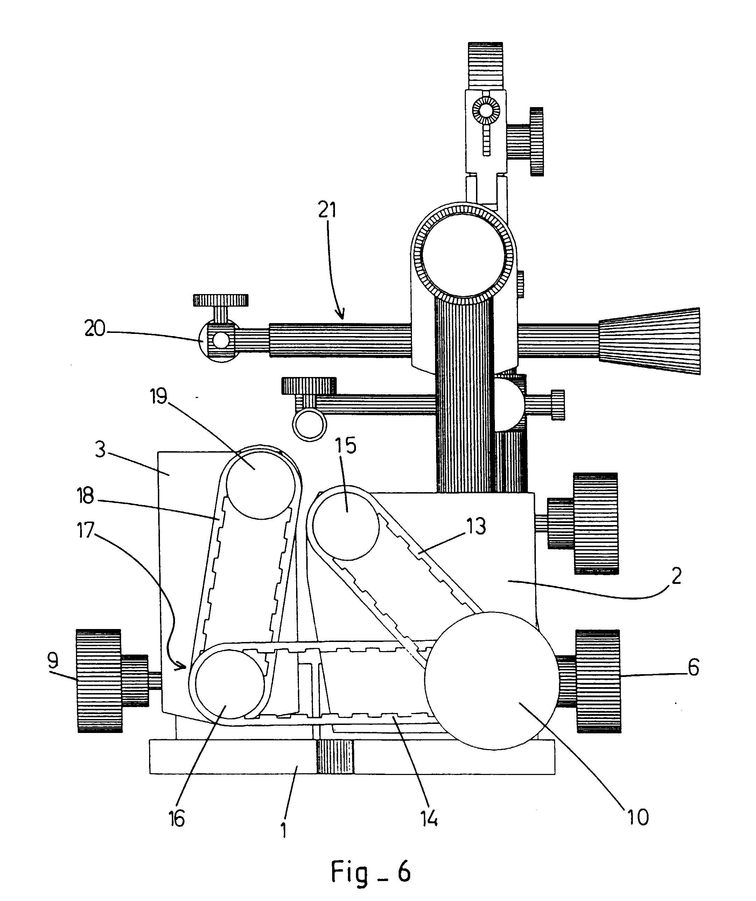

- la figure 6 est une vue d'arrière de l'appareil de la figure 1.

Dans le mode de réalisation représenté sur les figures, l'appareil comprend un socle 1 dont la surface inférieure plane est conformée pour reposer sur un plan de travail. Le socle 1 porte un premier bloc support 2 et un second bloc support 3, chaque bloc support 2 et 3 portant respectivement un premier rouleau support 4 et un second rouleau support 5 tous deux montés rotatifs sur des axes respectifs IV et V parallèles l'un à l'autre.

Chacun des blocs supports 2 et 3 est monté à pivotement sur le socle 1 selon un axe de pivotement respectif II ou III parallèle aux axes IV et V de rotation des rouleaux supports 4 et 5.

Chacun des blocs supports 2 et 3 peut être bloqué en rotation sur son axe respectif II et III par un organe de blocage actionnable par l'utilisateur. Par exemple, dans le mode de réalisation représenté, l'organe de blocage 6 du premier bloc support 2 comprend une vis radiale 7 se vissant dans un alésage taraudé 8 du socle 1 et venant en appui soit sur l'axe de pivotement II du premier bloc support 2, soit sur une douille de répartition d'efforts interposée autour dudit axe de pivotement II et non représentée sur les figures. L'axe de pivotement II est solidaire en rotation du bloc support 2.

Le second organe de blocage 9 du second bloc support 3 peut être constitué de façon similaire.

Par rotation de l'un des blocs supports 2 ou 3 ou des deux blocs supports 2 et 3, autour de leurs axes respectifs II et III, on peut déplacer latéralement l'un par rapport à l'autre l'un des rouleaux supports 4 et 5 ou les deux rouleaux supports 4 et 5. Lorsque l'écartement désiré est atteint, on fixe la position des blocs supports 2 et/ou 3 en serrant les vis des organes de blocage 6 et/ou 9.

Les deux rouleaux supports 4 et 5 sont tous deux entraînés en rotation par des moyens d'entraînement comprenant un bouton d'entraînement manuel 10 et des moyens de transmission. Le bouton d'entraînement manuel 10 est monté rotatif en bout de l'axe de pivotement II du premier bloc support 2, et est solidaire de deux poulies motrices 12 et 11 coaxiales reliées par des courroies crantées 13 et 14 respectivement à une première poulie 15 montée en bout d'arbre de rotation IV du premier rouleau support 4 et à une seconde poulie 16 montée rotative en bout de l'axe de pivotement III du second bloc support 3. Cette seconde poulie 16 est solidaire d'une troisième poulie 17 coaxiale reliée par une courroie crantée 18 à une quatrième poulie 19 montée en bout d'arbre de rotation V du second rouleau support 5.

Par un tel dispositif de transmission, les deux rouleaux supports 4 et 5 sont entraînés simultanément en rotation dans le même sens, à partir de la rotation du bouton d'entraînement manuel 10, et le dispositif de transmission ne perturbe pas les possibilités de pivotement des blocs supports 2 et 3 autour de leurs axes de pivotement respectifs II et III.

L'appareil comprend également un rouleau d'appui 20, déplaçable, porté par une potence 21 solidaire du premier bloc support 2. La potence 21 comprend un montant 22 réglable en hauteur, et un bras 23 réglable en longueur et articulé sur le montant 22 selon un axe de rotation parallèle aux axes de rotation IV et V des rouleaux supports 4 et 5. Un ressort sollicite le bras 23 et le repousse dans la direction illustrée par la flèche 24, pour repousser le rouleau d'appui 20 vers les rouleaux supports 4 et 5. De cette façon, le rouleau d'appui 20 vient en appui sur une pièce à vérifier reposant elle-même sur deux génératrices supérieures des supports 4 et 5. Le réglage de longueur du montant 22 et du bras 23 s'effectue par des moyens traditionnels, en prévoyant des alésages de coulissement et des vis de serrage, comme illustré sur les figures. Ce réglage permet de régler la force d'appui du rouleau d'appui 20.

Une seconde potence 26, solidaire du premier bloc support 2, porte une butée axiale 25 réglable de positionnement, contre laquelle peut venir porter une pièce à vérifier posée sur les rouleaux supports 4 et 5. Par réglage de la longueur du bras et du montant de la potence 26, on peut régler la position de la butée axiale de positionnement 25.

L'appareil comprend en outre au moins un bras support de sonde 27, qui, sur les figures, est représenté en position déployée verticalement. Le bras support de sonde 27 selon l'invention comprend plusieurs segments articulés les uns aux autres, par exemple les segments 28, 29, 30 et 31. La base, ou premier segment 28 du bras, est montée à pivotement en bout d'un axe solidaire du premier bloc support 2, par exemple en bout de l'axe II.

L'une au moins des articulations reliant les différents segments 28 à 31 les uns aux autres est munie d'un cran de blocage définissant une position de test à laquelle il est facile de retourner après un pivotement du bras 27 dans le sens de son écartement par rapport à la pièce à vérifier posée sur les rouleaux supports 4 et 5.

Le dernier segment 31 du bras porte une sonde 32, par exemple une sonde munie d'un comparateur 33.

Pour effectuer une mesure, on règle l'écartement des rouleaux supports 4 et 5 en fonction du diamètre de la pièce à vérifier ; on pose la pièce à vérifier sur les rouleaux supports 4 et 5, et on la maintient en appui sur ces rouleaux par le rouleau d'appui 20 sollicité par son ressort ; on articule le bras 27 de façon à venir faire porter l'extrémité de la sonde 32 sur la surface de pièce à vérifier, soit sur sa surface extérieure, soit sur une surface intérieure, soit sur une surface frontale, et on entraîne en rotation les rouleaux supports en manoeuvrant le bouton d'entraînement manuel 10. La lecture du comparateur 33 indique si la concentricité est bonne dans le cas d'une lecture constante, ou si la concentricité est défectueuse dans le cas d'une lecture variable.

La présente invention n'est pas limitée aux modes de réalisation qui ont été explicitement décrits, mais elle en inclut les diverses variantes et généralisations contenues dans le domaine des revendications ci-après.

## Revendications

1. Appareil de vérification de concentricité, comprenant :
- deux rouleaux supports (4, 5) à axes parallèles (IV, V) portés par un socle (1), les rouleaux supports (4, 5) étant entraînés tous deux en rotation par des moyens d'entraînement (10),
- un rouleau d'appui (20) déplaçable, porté par le socle (1), adapté pour repousser une pièce à vérifier en appui sur les rouleaux supports (4, 5),
- des moyens (27) pour maintenir et positionner une sonde (32) en relation avec la pièce à vérifier, en différentes zones décalées axialement,
caractérisé en ce que :
- l'un et l'autre des rouleaux supports (4, 5) sont déplaçables latéralement sur le socle (1) parallèlement à eux-mêmes, pour être écartés ou rapprochés l'un de l'autre, et pour être bloqués en toute position désirée par des organes de blocage (6, 9) actionnables par l'utilisateur,
de sorte que l'utilisateur peut modifier l'écartement relatif des rouleaux supports (4, 5) pour modifier et adapter les conditions de mesure,
- chaque rouleau support (4, 5) est monté sur un bloc support respectif (2, 3), qui pivote sur le socle (1) selon un axe de pivotement (II, III) parallèle à l'axe des rouleaux supports (IV, V), et qui peut être bloqué en rotation par un desdits organes de blocage (6, 9) actionnables par l'utilisateur.

2. Appareil selon la revendication 1, caractérisé en ce que les moyens d'entraînement comprennent :
- un bouton d'entraînement manuel (10) monté rotatif en bout de l'axe de pivotement (II) de l'un des blocs supports (2) et solidaire de deux poulies motrices coaxiales (11, 12) reliées par des courroies crantées (13, 14) respectivement à une première poulie (15) montée en bout d'arbre de rotation (IV) du premier rouleau support (4) et à une seconde poulie (16) montée rotative en bout de l'axe de pivotement (III) de l'autre des deux blocs supports (3), ladite seconde poulie (16) étant solidaire d'une troisième poulie (17) coaxiale reliée par une courroie crantée (18) à une quatrième poulie (19) montée en bout d'arbre de rotation (V) du second rouleau support (5).

3. Appareil selon la revendication 1, caractérisé en ce que l'organe de blocage (6, 9) comprend une vis radiale (7) se vissant dans un alésage radial taraudé (8) du socle (1) et en appui soit sur l'axe de pivotement (II) solidaire du bloc support (2) soit sur une douille de répartition d'effort interposée autour dudit axe de pivotement (II) solidaire en rotation du bloc support (2).

4. Appareil selon l'une quelconque des revendications 1 à 3, caractérisé en ce qu'il comprend en outre des moyens de réglage de la force d'appui du rouleau d'appui (20).

5. Appareil selon l'une quelconque des revendications 1 à 4, caractérisé en ce que le rouleau d'appui (20) est porté par une potence (21) solidaire de l'un des blocs supports (2), ladite potence (21) comprenant un montant (22) réglable en hauteur, un bras (23) réglable en longueur et articulé sur le montant (22) en étant sollicité par un ressort le repoussant dans la direction (24) d'appui du rouleau d'appui (20) sur la pièce à vérifier.

6. Appareil selon l'une quelconque des revendications 1 à 5, caractérisé en ce qu'il comprend en outre au moins un bras support de sonde (27) à plusieurs segments (28, 29, 30, 31) articulés les uns aux autres, et dont la base (28) est montée à pivotement en bout d'un axe (II) solidaire de l'un des blocs supports (2), avec au moins une articulation à cran de blocage définissant une position de test à laquelle il est facile de retourner après un pivotement du bras (27) dans le sens de son écartement par rapport à la pièce à vérifier.

7. Appareil selon l'une quelconque des revendications 1 à 6, caractérisé en ce qu'il comprend en outre une butée axiale (25) réglable de positionnement contre laquelle vient porter la pièce à vérifier.

## Claims

1. Concentricity verification equipment consisting of:
- two supporting rollers (4, 5) with parallel shafts (IV, V) supported by a base (1), with supporting rollers (4, 5) both driven in rotation by driving means (10),
- a movable supporting roller (20), supported by base (1), adapted to push back a part and check it while bearing against supporting rollers (4, 5),
- means (27) of maintaining and positioning a probe (32) in relation with the item to be verified, in various areas that are offset axially,
characterized in that:
- each of the supporting rollers (4, 5) can be moved laterally on base (1) in parallel with one another so as to be moved away or moved closer to one another and so as to be locked in any desired position by the locking devices (8, 9) that can be operated by the user in such a way that the user can modify the relative interval between supporting rollers (4, 5) so as to change and adapt the measurement conditions,
- each supporting roller (4, 5) is mounted on respective supporting blocks (2, 3) pivoting on base (1) on a pivoting shaft (II, III) parallel to the shaft of supporting roller (IV, V) and which can be blocked in its rotation by said locking devices (6, 9), operated by the user.

2. Equipment according to claim 1, characterized in that the driving means include:
- a manual driving knob (10) mounted so as to rotate at the end of the pivoting shaft (II) of one of the supporting blocks (2) and integral with two coaxial driving pulleys (11, 12) connected by toothed belts (13, 14) respectively to the first pulley (15) mounted at the end of rotation shaft (IV) of first supporting pulley (4) and to a second pulley (16) mounted to rotate at the end of pivoting shaft (III) on the other of the two supporting blocks (3), said second pulley (16) being integral with a third coaxial pulley (17) connected by a toothed belt (18) to a fourth pulley (19) mounted at the end of the rotation shaft (V) of the second support roller (5).

3. Equipment according to claim 1, characterized in that locking device 6, 9) includes a radial screw (7) screwing into the tapped radial bore (8) of base (I) and bearing either on pivoting shaft (II) integral with support block (2) or on a force distributing collar interposed about said pivoting shaft (II), made integral in its rotation with supporting block (2).

4. Equipment according to any of claims 1 to 3, characterized in that it also includes means of adjusting the bearing force of bearing roller (20).

5. Equipment according to any of claims 1 to 4, characterized in that bearing roller (20) is supported by a gantry (21) integral with one of supporting blocks (2), said gantry (21) comprising an upright (22) adjustable in height, an arm (23) adjustable in length and articulating on upright (22) while being solicited by a spring pushing bearing roller (20) in direction (24) to bear against the part to be verified.

6. Equipment according to any of claims 1 to 5, characterized in that it also includes at least one supporting arm for probe (27) comprising several parameters (28, 29, 30, 31) articulated with respect to one another and whose base (28) is mounted to pivot at the end of a shaft (2) integral with one of the supporting blocks (22) with at least one locking stop articulation defining a test position to which it is easy to return after the pivoting of arm (27) in the direction causing it to move to and from the part to be verified.

7. Equipment according to any of claims 1 to 6, characterized in that it also includes an axial stop (25) adjustable in its positioning, and against which the part to be verified bears.

## Patentansprüche

1. Konzentrizitätsprüfgerät bestehend aus:
- zwei Trägerwalzen (4, 5) mit parallelen Achsen (IV, V), getragen von einem Sockel (1), wobei die Trägerwalzen (4, 5) alle beide mittels Antriebsvorrichtungen (10) in Rotation gebracht werden,
- eine verstellbare Stützrolle (20), vom Sockel (1) getragen, dafür vorgesehen, ein zu prüfendes Teil auf die Trägerwalzen (4, 5) zur Auflage zurückzudrücken,
- Mittel (27), um einen Sensor (32) im Verhältnis zum zu prüfenden Teil in verschiedenen, axial verschobenen Zonen festzuhalten und zu positionieren, dadurch gekennzeichnet, daß:
- die eine und andere Trägerwalze (4, 5) seitlich auf dem Sockel (1) parallel zu sich selbst verschiebbar sind, um eine von der anderen entfernt oder angenähert zu werden und um in jeder gewünschten Stellung mittels, vom Verwender bedienbare Feststellvorrichtungen (6, 9) festgestellt zu werden,
so daß der Verwender den relativen Abstand der Trägerwalzen (4, 5) verändern kann, um die Meßbedingungen zu ändem oder anzupassen,
- jede Trägerwalze (4, 5) ist jeweils auf einem Trägerblock (2, 3) angebracht, der auf dem Sockel (1) um einen Schwenkbolzen (II, III) parallel zur Achse der Trägerwalzen (IV, V) ausschwenkt und der in der Rotation mittels den besagten, vom Verwender bedienbaren Feststellvorrichtungen (6, 9) festgestellt werden kann.

2. Gerät nach Anspruch 1, dadurch gekennzeichnet, daß die Antriebsvorrichtungen folgendes enthalten:
- einen manuellen Antriebsknopf (10), der am Ende des Schwenkbolzens (II) von einem der Trägerblöcke (2) drehbar gelagert und fest mit zwei koaxialen Festscheiben (11, 12) verbunden ist, welche mittels Zahnriemen (13, 14) jeweils mit einer ersten Riemenscheibe (15), die am Ende der Drehachse (IV) der ersten Trägerwalze (4) drehbar gelagert ist und mit einer zweiten Riemenscheibe (16), die am Ende der Drehachse (II) am anderen der zwei Trägerblöcke (3) drehbar gelagert ist, verbunden sind, wobei die besagte zweite Riemenscheibe (16) mit einer dritten Riemenscheibe (17) fest verbunden ist, welche koaxial mit einem Zahnriemen (18) an eine vierte Riemenscheibe (19) verbunden ist, welche wiederum am Ende der Drehachse (V) der zweiten Trägerwalze (5) angebracht ist.

3. Gerät nach Anspruch 1, dadurch gekennzeichnet, daß die Feststellvorrichtung (6, 9) aus einer Radialschraube (7) besteht. die in eine Gewinderadialbohrung (8) des Sockels (1) geschraubt wird und dies entweder in Auflage auf die Drehachse (II), die fest mit dem Trägerblock (2) verbunden ist oder auf eine Buchse zur Belastungsverteilung, die um diese genannte Drehachse (II) eingefügt ist, welche in der Rotation mit dem Trägerblock (2) fest verbunden ist.

4. Gerät nach einem der Ansprüche 1 bis 3, dadurch gekennzeichnet, daß es zusätzlich Regelungsvorrichtungen der Auflagerkraft der Stützrolle (20) enthält.

5. Gerät nach einem der Ansprüche 1 bis 4, dadurch gekennzeichnet, daß die Stützrolle (20) von einem, fest mit einem der Trägerblöcke (2) verbundenen Galgen (21) getragen wird, wobei der besagte Galgen (21) aus einer, in der Höhe verstellbaren Säule (22), einem in der Länge verstellbaren und auf der Säule (22) artikulierten Arm (23) besteht, welcher durch eine Feder beansprucht wird, die ihn in die Auflagerichtung (24) der Stützrolle (20) auf das zu prüfende Teil zurückdrückt.

6. Gerät nach einem der Ansprüche 1 bis 5, dadurch gekennzeichnet, daß es zusätzlich mindestens einen, aus mehreren Segmenten (28, 29, 30, 31) bestehenden Sensorträgerarm (27), enthält, wobei die Segmente untereinander beweglich sind und deren Basis (28) schwenkbar am Ende einer, fest mit einem der Trägerblöcke (2) verbundenen Achse (II) gelagert ist, mit mindestens einem Gelenk mit Feststellraste, die eine Prüfposition definiert, bei welcher es einfach ist, nach einem Schwenken des Arms (27) in die Richtung seines Abstands im Verhältnis zum zu prüfenden Teil zurückzukehren.

7. Gerät nach einem der Ansprüche 1 bis 6, dadurch gekennzeichnet, daß es unter anderem einen einstellbaren Axialanschlag (25) zur Positionierung enthält, gegen welchen sich das zu prüfende Teil aufstützt.
